# FASCICULE DE BREVET EUROPEEN

(11) **EP 2 774 841 B1**
(45) Date de publication et mention de la délivrance du brevet: **23.12.2015**
(21) Numéro de dépôt: 14000462.3
(22) Date de dépôt: 10.02.2014
(51) Int. Cl.: B64C 7/00, B64C 27/00, B64C 27/04, B64D 1/14, B64D 1/22

(54) **Dispositif pour protéger un giravion contre une structure pyramidale d'emport de charge**
Vorrichtung zum Schutz eines Drehflügelflugzeugs gegen eine pyramidale Struktur zur Lastbeförderung
Device for protecting a rotorcraft against a pyramidal load-carrying structure

(30) Priorité: 07.03.2013 FR 1300521
(43) Date de publication de la demande: 10.09.2014
(73) Titulaire: Airbus Helicopters, 13725 Marignane Cedex (FR)
(72) Inventeur: Prud'Homme-Lacroix, Pierre, F-13127 Vitrolles (FR)
(74) Mandataire: GPI & Associés

(56) Documents cités:
- EP-A2- 2 481 671
- WO-A1-95/06585
- US-A- 3 044 818
- US-A- 4 378 919
- US-A- 5 069 318
- US-A- 5 344 203

## Description

La présente invention concerne un dispositif de protection pour protéger un giravion contre une structure pyramidale d'emport de charge, un système de fixation muni dudit dispositif et de ladite structure, et un giravion muni du système de fixation. De plus, l'invention vise le procédé mis en oeuvre.

Le domaine technique de l'invention est donc celui des dispositifs de fixation d'une charge externe à un aéronef, et notamment un aéronef muni d'une voilure tournante.

Classiquement, un giravion comporte un fuselage portant au moins un rotor de sustentation, voire de propulsion. Le giravion peut alors être pourvu d'un système de fixation amovible pour porter une charge externe.

Un tel système de fixation peut inclure usuellement un crochet-délesteur tournant ou non tournant fixé au fuselage par un moyen de fixation. Une élingue est alors accrochée à ce crochet-délesteur afin de permettre l'emport de charges externes.

Le système de fixation peut notamment être un système dénommé « cargo swing » en langue anglaise, ou plus simplement « swing ».

Un système de fixation « swing » peut inclure une structure pyramidale. La structure pyramidale est munie d'un cadre en forme de quadrilatère et de quatre bras, chaque bras s'étendant en élévation du cadre vers un sommet.

Plus précisément, la structure pyramidale possède une paire de deux bras avant et une paire de deux bras arrière. Les termes « avant » et « arrière » font référence au sens d'avancement de l'aéronef.

Notamment, la structure pyramidale peut posséder deux bras longs et deux bras courts, le sommet n'étant alors pas placé à l'aplomb de l'intersection des diagonales du cadre. Par exemple, les bras avant représentent les bras courts, les bras arrière représentant les bras longs.

Le cadre peut être réalisé à l'aide de quatre tubes reliés deux à deux, chaque bras étant par exemple fixé aux coins du cadre. Ce cadre peut aussi être obtenu à l'aide de quatre tubes indépendants, chaque tube s'étendant entre deux bras adjacents.

Par ailleurs, le système de fixation peut être rigide ou articulé.

En effet, les quatre bras peuvent être liés les uns aux autres pour constituer le sommet du système de fixation. Les quatre bras sont alors solidaires les uns des autres.

Cependant, les bras peuvent être reliés deux à deux. Par exemple, les deux bras avant sont solidarisés par leurs extrémités supérieures, les deux bras arrière étant aussi solidarisés par leurs extrémités supérieures. Les extrémités supérieures des bras avant et arrière sont alors articulées au socle du sommet selon un axe de rotation.

Les deux bras avant constituent ainsi un ensemble avant pouvant effectuer une rotation par rapport à un ensemble arrière constitué des deux bras arrière.

Les tubes constituant le cadre de la structure pyramidale sont alors adaptés pour permettre une telle rotation relative entre les ensembles avant et arrière.

Indépendamment du type du système de fixation, un crochet-délesteur est usuellement suspendu au sommet de la structure pyramidale. Le déplacement du crochet-délesteur au sein du système de fixation est restreint à la zone délimitée par le cadre de la structure pyramidale.

La structure pyramidale est par ailleurs suspendue sous un fuselage par quatre câbles de suspension par exemple.

Le système de fixation « swing » est utilisé dans le domaine aéronautique avec satisfaction.

Cependant, la structure pyramidale peut s'avérer agressive en cas de crash du giravion.

Au cours d'un crash, lorsque le train d'atterrissage s'est déformé sous l'effet de l'énergie absorbée, la structure pyramidale entre en contact du sol. La structure pyramidale risque alors de perforer le fuselage, la forme de cette structure pyramidale la rendant très résistante à l'écrasement. Les efforts nécessaires à l'écrasement de la structure pyramidale sont en effet très élevés. La structure pyramidale risque de ne pas s'écraser, et donc de percuter le fuselage et de le perforer.

La situation est d'autant plus compliquée lorsqu'un giravion comporte des réservoirs de carburant dans la barque du fuselage supportant la structure pyramidale.

Dans la zone basse du fuselage, le giravion comporte alors en particulier une platine accueillant par exemple des pompes, des jaugeurs et autres équipements du circuit de carburant. Cette platine est conçue pour supporter un contact avec le sol en cas de crash et pour préserver l'étanchéité du réservoir. Toutefois, un impact avec le sommet d'une structure pyramidale peut s'avérer destructeur, la platine risquant ne pas pouvoir supporter les efforts introduits par la structure pyramidale.

En outre, même si la structure pyramidale s'écrase, les débris métalliques de cette structure pyramidale présentent encore un danger de perforation du réservoir.

On connait aussi les documents EP 2 481 671, US 3 044 818, US 5 069 318, US 5 344 203, US 4 378 919 et WO 95/06585.

La présente invention a alors pour objet de proposer un dispositif de protection pour protéger un giravion contre un impact avec une structure pyramidale d'emport de charge.

L'invention vise un dispositif de protection pour protéger un fuselage d'un giravion contre une structure pyramidale d'emport de charge. Cette structure pyramidale est munie d'un cadre en forme de quadrilatère ainsi que d'une première paire de deux bras et d'une deuxième paire de deux bras, chaque bras s'étendant en élévation du cadre vers un sommet.

La structure pyramidale inclut donc une paire de bras avant et une paire de bras arrière. Les termes « avant » et « arrière » sont à considérer en référence au sens d'avancement du giravion. En effet, la structure pyramidale s'étend longitudinalement de l'avant vers l'arrière du giravion, les bras avant étant dirigés vers l'avant du giravion, les bras arrière étant dirigés vers l'arrière du giravion

De plus, le dispositif de protection inclut :
- une plaque de protection apte à être interposée entre le fuselage et la structure pyramidale,
- un couteau solidaire de la plaque de protection pour exercer un effort sur lesdits deux bras de la première paire afin de les faire rompre,
- un compas muni de deux branches reliées à la plaque de protection pour tendre à écarter lesdits deux bras de la deuxième paire l'un de l'autre transversalement.

Le couteau a pour fonction d'exercer des efforts sur une paire de bras pour les faire rompre, le compas ayant pour fonction d'exercer des efforts sur l'autre paire de bras pour les écarter.

Le dispositif de protection permet donc de générer une rupture d'une première paire de bras, la paire de bras arrière par exemple, beaucoup plus facilement qu'en appuyant sur le sommet de la structure pyramide. Rendus instables, les bras de la deuxième paire, à savoir les bras avant selon notre exemple, fléchissent sous l'effet du compas notamment, et génèrent l'effondrement de la structurale pyramide. Un moyen d'accrochage peut alors pivoter pour se coucher entre les bras de la deuxième paire.

Par exemple, les niveaux d'efforts requis pour générer l'effondrement sont significativement réduits par rapport à un agencement usuel. Ces niveaux d'efforts peuvent être supportés par un fuselage, voire par une platine portant des organes d'un circuit de carburant.

En outre, la plaque de protection remplit aussi un rôle de bouclier en protégeant le fuselage contre les débris résultant de l'effondrement de la structure pyramidale.

Par ailleurs, la plaque s'étendant longitudinalement d'une extrémité libre avant vers une extrémité libre arrière, le couteau et le compas peuvent être disposés entre lesdites extrémités libres avant et arrière.

Plus précisément, le couteau et le compas sont disposés longitudinalement entre les extrémités libres avant et arrière, en s'étendant transversalement et en élévation.

Cette caractéristique permet d'optimiser la protection du fuselage contre les débris résultant de l'effondrement de la structure pyramidale.

Par ailleurs, les branches peuvent être solidaires l'une de l'autre et sont séparées par un angle tendant à s'accroître sous l'effet d'un effort en élévation.

Lors d'un crash, les efforts verticaux subis tendent à déplier le compas en augmentant ledit angle.

A tire de variante, le dispositif de fixation peut comporter un moyen d'écartement tendant à écarter les branches transversalement l'une de l'autre, tel qu'un ressort par exemple. Les deux branches sont alors articulées l'une à l'autre, le moyen d'écartement tendant à plaquer chaque branche contre un bras de la deuxième paire de bras.

Par ailleurs, chaque branche peut être fixée à un bras de la deuxième paire de bras pour garantir que ces branches exercent un effort transversal sur ces bras à un endroit prédéterminé par le constructeur.

A titre de variante, les branches coopèrent chacune par interférence de forme avec un bras de la deuxième paire de bras. Les branches peuvent par exemple avoir une section en L ou en U à cet effet, ou toute autre section suffisamment résistante.

En outre, lesdites branches du compas peuvent être articulées à ladite plaque de protection. Cette caractéristique est d'autant plus intéressante lorsque le système de fixation est un système articulé.

Outre un dispositif de protection, l'invention concerne un système de fixation d'une charge à un fuselage d'un giravion. Ce système comprend une structure pyramidale d'emport de charge, la structure pyramidale étant munie d'un cadre en forme de quadrilatère ainsi que d'une première paire de deux bras et d'une deuxième paire de deux bras, chaque bras s'étendant en élévation du cadre vers un sommet.

Le système de fixation inclut un dispositif de protection tel que décrit précédemment comprenant :
- une plaque de protection pour être interposée entre le fuselage et la structure pyramidale,
- un couteau solidaire de la plaque de protection et en contact avec les deux bras de la première paire de bras
- un compas muni de deux branches reliées à la plaque de protection pour tendre à écarter les bras de la deuxième paire de bras l'un de l'autre transversalement.

Ce système peut comprendre une ou plusieurs des caractéristiques additionnelles qui suivent.

Par exemple, le couteau peut être en contact avec le milieu de chaque bras de la première paire de bras en vol pour faciliter leurs ruptures.

De même, chaque branche est en contact avec le milieu de chaque bras de la deuxième paire de bras en vol.

En outre, lorsque les bras sont articulés audit sommet selon un axe de rotation, les branches sont éventuellement articulées à la plaque de protection pour pouvoir effectuer une rotation autour de cet axe de rotation.

En outre, la plaque de protection peut être fixée à la structure pyramidale, tel qu'à un organe du sommet de cette structure pyramidale par exemple. Ainsi, le couteau et le compas sont toujours correctement positionnés par rapport aux bras.

Le système peut inclure un jeu en élévation entre la plaque de protection et le sommet. Ce jeu en élévation vise à garantir un contact entre le couteau et les bras de la première paire de bras notamment. De cette manière, le système assure que les bras de la première paire seront fléchis au moment où l'effort d'écrasement sera introduit pour favoriser le mode de rupture de ces bras.

Par ailleurs, l'invention concerne un giravion muni d'un fuselage. Ce giravion est muni d'un système de fixation du type précédemment décrit, le cadre étant suspendu sous une surface inférieure du fuselage par une pluralité de moyens de suspension.

Par exemple, quatre câbles de suspension sont accrochés au cadre ou aux bras pour suspendre la structure pyramidale sous le fuselage.

Par ailleurs, les bras de la première paire de bras sont longs, les bras de la deuxième paire de bras étant courts. Les termes relatifs « long » et « court » permettent de comprendre que les bras de la première paire sont plus longs que les bras de la deuxième paire.

Dès lors, le couteau peut plus facilement casser les bras de la première paire de bras.

Enfin, l'invention vise un procédé pour protéger un fuselage d'un giravion contre une structure pyramidale d'emport de charge, la structure pyramidale étant munie d'un cadre en forme de quadrilatère ainsi que d'une première paire de deux bras et d'une deuxième paire de deux bras, chaque bras s'étendant en élévation du cadre vers un sommet. Selon ce procédé :
- on appuie sur les bras de la première paire pour les casser afin de générer une rotation de la structure pyramidale,
- on écarte les bras de la deuxième paire l'un de l'autre transversalement pour écraser la structure pyramidale, et
- on dispose une plaque de protection entre la structure pyramidale et le fuselage pour protéger le fuselage des débris générés lors de l'écrasement de la structure pyramidale.

De plus, on peut dimensionner lesdits bras pour que les bras de la première paire soient longs, lesdits bras de la deuxième paire de bras étant courts.

L'invention et ses avantages apparaîtront avec plus de détails dans le cadre de la description qui suit avec des exemples de réalisation donnés à titre illustratif en référence aux figures annexées qui représentent :
- la figure 1, un dispositif de protection selon l'invention,
- la figure 2, un schéma présentant une structure pyramidale,
- les figures 3 à 10, des schémas explicitant le procédé selon l'invention.

Les éléments présents dans plusieurs figures distinctes sont affectés d'une seule et même référence.

On note que trois directions X, Y et Z orthogonales les unes par rapport aux autres sont représentées sur certains figures.

La première direction X est dite longitudinale. Les termes « longitudinal », « avant » et « arrière » sont relatifs à cette première direction.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

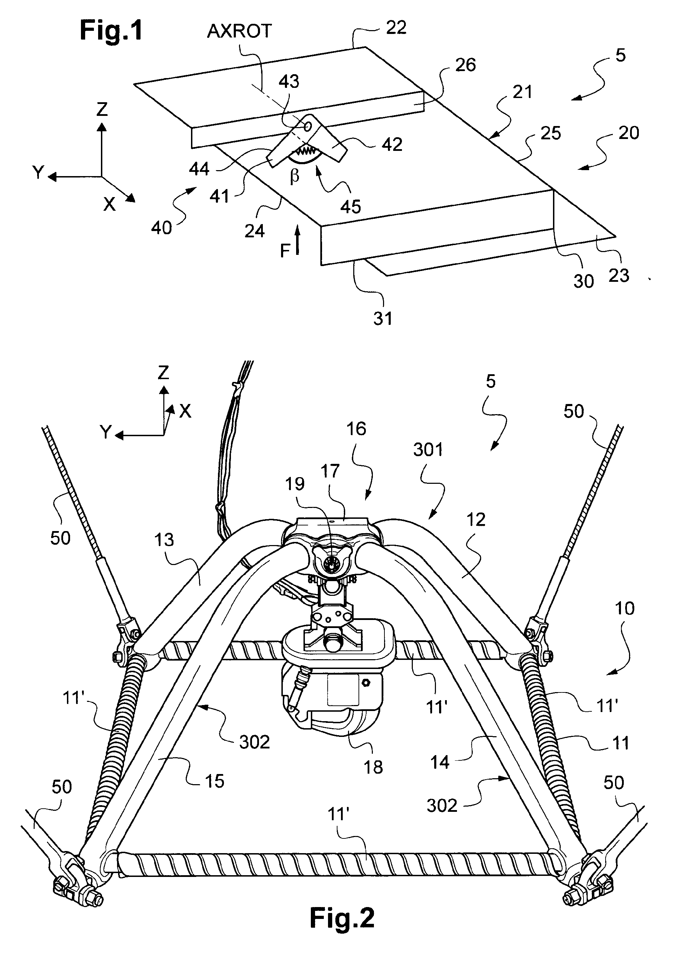

La figure 1 présente un dispositif de protection 20 selon l'invention.

Ce dispositif de protection 20 inclut une plaque de protection 21 s'étendant longitudinalement d'une extrémité libre avant 22 vers une extrémité libre arrière 23, et transversalement d'un côté droit 24 vers un côté gauche 25.

De plus, le dispositif de protection 20 possède un couteau 30 fixé à la plaque de protection. Le couteau 30 s'étend en élévation de la plaque de protection vers une arête 31, et transversalement du côté droit 24 vers le côté gauche 25. Le couteau 30 est en outre agencé sous la plaque de protection longitudinalement entre l'extrémité libre avant 22 et l'extrémité libre arrière 23.

La figure 1 fait apparaître un couteau continu. Toutefois, le couteau 30 peut présenter deux tronçons discontinus visant à sectionner chacun un bras d'un système de fixation.

En outre, le dispositif de protection 20 comprend un compas 40. Le compas 40 est fixé à la plaque de protection 20 par le biais du support 26 s'étendant transversalement. Le compas 40 est en outre agencé sous la plaque de protection longitudinalement entre l'extrémité libre avant 22 et l'extrémité libre arrière 23

Ce compas 40 présente deux branches 41, 42 séparées angulairement par un angle β.

Les deux branches peuvent être fixées l'une à l'autre de manière à constituer une unique pièce. Des efforts verticaux schématisés par la flèche F vont alors tendre à déplier le compas en augmentant l'angle β.

Alternativement, les deux branches 41, 42 peuvent être articulées l'une à l'autre. Un moyen d'écartement 45 tend alors à déplier le compas en augmentant l'angle β.

Par ailleurs, le compas peut être articulé à la plaque de protection 21 autour d'un axe de rotation AXROT.

Le dispositif de fixation 20 est alors utilisé au sein d'un système de fixation 5 visible sur la figure 2 pour protéger un fuselage.

Ce système de fixation 5 comprend une structure pyramidale 10 pouvant être suspendue à une surface inférieure d'un fuselage par le biais de moyens de suspension 50. Quatre câbles de suspension sont ainsi représentés sur la figure 2.

La structure pyramidale 10 s'étend en élévation d'une base vers un sommet 16.

La base est constituée d'un cadre 11 en forme de quadrilatère. Ce cadre 11 est alors muni de quatre tubes 11' de délimitation.

De plus, la structure pyramidale inclut quatre bras 12, 13, 14, 15 s'étendant en élévation de la base de la structure pyramidale vers son sommet 16.

Une extrémité inférieure de chaque bras 12, 13, 14, 15 peut alors être reliée au cadre 11. Par exemple, chaque tube 11' du cadre 11 s'étend entre deux extrémités inférieures de deux bras.

Les extrémités supérieures des bras 12, 13, 14, 15 aboutissent alors sur le sommet 16 de la structure pyramidale.

Les quatre bras incluent une première paire 301 de deux bras 12, 13 dirigés par exemple vers l'arrière d'un giravion, et une deuxième paire 302 de deux bras 14, 15 dirigés vers l'avant du giravion. Plus précisément et à titre d'exemple, la première paire est munie de bras longs, alors que la deuxième paire est munie de bras courts.

Les extrémités supérieures des quatre bras peuvent être fixées les unes aux autres pour constituer le sommet 16.

On comprend que l'on entend par « cadre », une structure de forme en forme de quadrilatère comprenant au moins un organe mécanique.

Cependant, selon l'exemple représenté, les extrémités supérieures des deux bras 14, 15 de la deuxième paire 302 sont solidarisées l'une à l'autre, et articulées à un socle 17 autour d'un axe de rotation 19. De même, les extrémités supérieures des deux bras 12, 13 de la première paire 301 sont solidarisées l'une à l'autre, et articulées à un socle 17 autour de l'axe de rotation 19.

Par suite, la structure pyramidale porte un moyen d'accrochage 18, tel qu'un crochet-délesteur. Ce moyen d'accrochage peut être fixé au socle 17, ou encore le socle 17 peut faire partie du moyen d'accrochage 18.

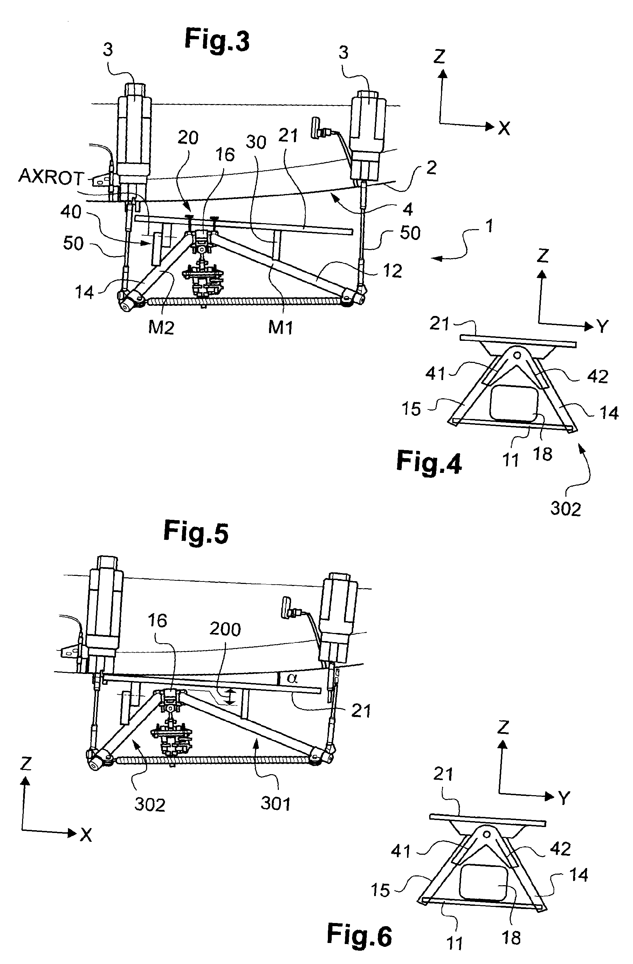

Dès lors, et en référence aux figures 3 et 4, le dispositif de protection est interposé entre le sommet 16 de la structure pyramidale et la surface inférieure 4 du fuselage 2 d'un giravion 1. La structure pyramidale est suspendue à des cadres forts 3 du giravion 1 par les moyens de suspension 50.

Le dispositif de protection peut être aussi suspendu à l'aéronef sous le fuselage.

Cependant, selon l'exemple représenté sur la figure 3, la plaque de protection 21 est reliée à la structure pyramidale pour pouvoir se déplacer conjointement avec cette structure pyramidale. La plaque de protection est par exemple fixée au sommet 16.

Eventuellement la plaque de protection est d'une part suspendue au fuselage et, d'autre part, reliée à la structure pyramidale.

Dès lors, le couteau 30 est en appui sur les bras 12, 13 de la première paire 301, en leur milieu M1 par exemple.

En outre, chaque branche du compas est en contact au moins transversalement avec un bras 14, 15 de la deuxième paire 302, en son milieu M2 par exemple.

Par ailleurs, lorsque les bras 14, 15 de la deuxième paire 302 sont articulés au sommet 16 selon un axe de rotation AXROT, le compas peut être articulé à la plaque de protection pour pouvoir effectuer une rotation autour de l'axe de rotation AXROT conjointement avec les bras 14, 15 de la deuxième paire 302.

En référence à la figure 4, chaque branche peut coopérer par interférence de forme avec un bras 14, 15 de la deuxième paire 302, pour qu'un dépliage du compas tende à induire un fléchissement de ces bras 14, 15 de la deuxième paire 302.

Lors d'un impact avec le sol se produisant dans des conditions accidentelles et en référence aux figures 5 et 6, la structure pyramidale vient en contact avec le sol.

La plaque de protection est alors en appui contre le fuselage. Toutefois, la plaque de protection peut présenter une angulation aigüe α avec la surface inférieure 4.

A ce stade, un jeu en élévation 200 subsiste éventuellement entre la plaque de protection et le sommet 16 de la structure.

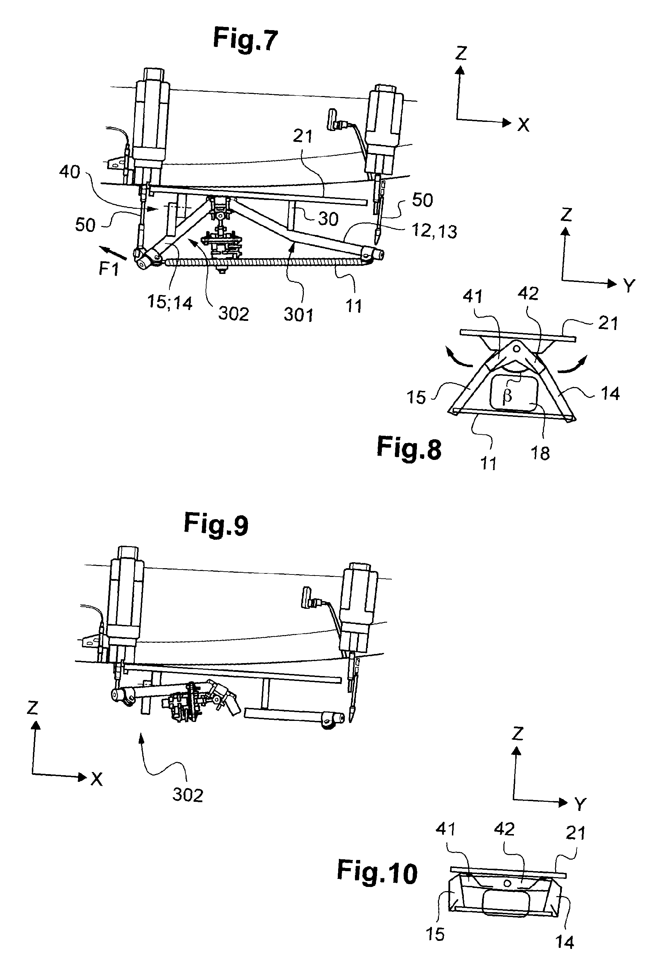

En référence aux figures 7 et 8, le giravion continue sa descente vers le sol.

Le couteau 30 entraîne alors la rupture des bras 12, 13 de la première paire 301. Ces bras de la première paire 301 cèdent en premier du fait de la fragilisation induite par l'effort exercé par le couteau 30.

Lors du déplacement de l'aéronef vers le sol, il en résulte un déplacement du sommet vers le sol selon la flèche F1 forçant ainsi les bras de la deuxième paire 302 à se coucher vers l'arrière. Ce basculement tend à privilégier une rotation du moyen d'accrochage.

L'angle β du compas 40 avant augmente pour un effort vertical, étant donné la pression exercée sur les bras 14, 15 de la deuxième paire 302. Ce compas 40 force donc ces bras 14, 15 de la deuxième paire 302 à légèrement s'écarter.

En référence aux figures 9 et 10, le mouvement d'écrasement se poursuit. Les bras 12, 13 de la première paire 301 se déforment alors complètement.

De plus les bras 14, 15 de la deuxième paire 302 sont fragilisés latéralement. Ces bras 14, 15 de la deuxième paire 302 fléchissent et tendent à s'écraser verticalement.

En outre, l'écartement généré des bras 14, 15 de la deuxième paire 302 par le compas permet de libérer suffisamment d'espace pour ranger le moyen d'accrochage dans une position couchée.

La plaque de protection tend de plus à protéger le fuselage des débris générés par l'écrasement de la structure pyramidale.

A la fin de ce stade assez peu d'énergie a été absorbée. Un réservoir logé dans le fuselage peut alors être amené à impacter la plaque de protection à une vitesse acceptable.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de protection (20) pour protéger un fuselage (2) d'un giravion (1) contre une structure pyramidale (10) d'emport de charge, ladite structure pyramidale (10) étant munie d'un cadre (11) en forme de quadrilatère ainsi que d'une première paire de deux bras (12, 13) et d'une deuxième paire de deux bras (14, 15), chaque bras (12, 13, 14, 15) s'étendant en élévation du cadre (11) vers un sommet (16),
**caractérisé en ce que** ledit dispositif de protection inclut :
- une plaque de protection (21) apte à être interposée entre ledit fuselage (2) et ladite structure pyramidale (10),
- un couteau (30) solidaire de la ladite plaque de protection (21) pour exercer un effort sur les bras de la première paire afin de les faire rompre,
- un compas (40) muni de deux branches (41, 42) reliées à ladite plaque de protection (21) pour tendre à écarter l'un de l'autre transversalement les bras de la deuxième paire.

2. Dispositif selon la revendication 1,
**caractérisé en ce que** ladite plaque de protection (21) s'étendant longitudinalement d'une extrémité libre avant (22) vers une extrémité libre arrière (23), ledit couteau (30) et ledit compas (40) sont disposés entre lesdites extrémités libres avant (22) et arrière (23).

3. Dispositif selon l'une quelconque des revendications 1 à 2, **caractérisé en ce que** les branches sont solidaires l'une de l'autre et sont séparées par un angle tendant à s'accroitre sous l'effet d'un effort en élévation.

4. Dispositif selon l'une quelconque des revendications 1 à 3,
**caractérisé en ce que** ce dispositif comporte un moyen d'écartement tendant à écarter les branches transversalement l'une de l'autre.

5. Dispositif selon l'une quelconque des revendications 1 à 4,
**caractérisé en ce que** lesdites branches coopèrent chacune par interférence de forme avec un bras de ladite deuxième paire de bras.

6. Dispositif selon l'une quelconque des revendications 1 à 4,
**caractérisé en ce que** lesdites branches sont articulées à ladite plaque de protection.

7. Système de fixation (5) d'une charge à un fuselage (2) d'un giravion (1), ledit système de fixation (5) comprenant une structure pyramidale (10) d'emport de charge, ladite structure pyramidale (10) étant munie d'un cadre (11) en forme de quadrilatère ainsi que d'une première paire de deux bras (12, 13) et d'une deuxième paire de deux bras (14, 15), chaque bras (12, 13, 14, 15) s'étendant en élévation du cadre (11) vers un sommet (16),
**caractérisé en ce que** ce système de fixation (5) inclut un dispositif de protection (20) selon l'une quelconque des revendications 1 à 6 comprenant :
- une plaque de protection (21) pour être interposée entre ledit fuselage (2) et ladite structure pyramidale (10),
- un couteau (30) solidaire de la ladite plaque de protection (21) et en contact avec lesdits bras de la première paire de bras,
- un compas (40) muni de deux branches (41, 42) reliées à ladite plaque de protection (21) pour tendre à écarter l'un de l'autre transversalement lesdits bras de la deuxième paire de bras.

8. Système selon la revendication 7,
**caractérisé en ce que** ledit couteau (30) est en contact avec le milieu (M1) desdits bras de la première paire de bras en vol.

9. Système selon l'une quelconque des revendications 7 à 8,
**caractérisé en ce que** chaque branche (41, 42) est en contact avec le milieu (M2) desdits bras de la deuxième paire de bras en vol.

10. Système selon l'une quelconque des revendications 7 à 9,
**caractérisé en ce que**, lesdits bras étant articulés audit sommet selon un axe de rotation (AXROT), lesdites branches (41, 42) sont articulées à la plaque de protection pour pouvoir effectuer une rotation autour dudit axe de rotation (AXROT).

11. Système selon l'une quelconque des revendications 7 à 10,
**caractérisé en ce que** ladite plaque de protection est fixée à la structure pyramidale.

12. Système selon la revendication 11,
**caractérisé en ce que** ledit système de fixation inclut un jeu en élévation (200) entre la plaque de protection (21) et le sommet (16).

13. Système selon l'une quelconque des revendications 7 à 12,
**caractérisé en ce que** lesdits bras de la première paire de bras sont longs, lesdits bras de la deuxième paire de bras étant courts.

14. Giravion (1) muni d'un fuselage (2),
**caractérisé en ce que** ledit giravion (1) est muni d'un système de fixation (5) selon l'une quelconque des revendications 7 à 13, ledit cadre (11) étant suspendu sous une surface inférieure (4) du fuselage par une pluralité de moyens de suspension (50).

15. Procédé pour protéger un fuselage (2) d'un giravion (1) contre une structure pyramidale (10) d'emport de charge, ladite structure pyramidale (10) étant munie d'un cadre (11) en forme de quadrilatère ainsi que d'une première paire de deux bras (12, 13) et d'une deuxième paire de deux bras (14, 15), chaque bras (12, 13, 14, 15) s'étendant en élévation du cadre (11) vers un sommet (16), **caractérisé en ce que** :
- on appuie sur lesdits deux bras de la première paire pour les rompre afin de générer une rotation de la structure pyramidale (10),
- on écarte lesdits deux bras de la deuxième paire l'un de l'autre transversalement pour écraser la structure pyramidale, et
- on dispose une plaque de protection (21) entre la structure pyramidale et ledit fuselage.

16. Procédé selon la revendication 15,
**caractérisé en ce qu'**on dimensionne lesdits bras pour que les bras de la première paire soient longs, lesdits bras de la deuxième paire de bras étant courts.

## Patentansprüche

1. Schutzvorrichtung (20) zum Schutz eines Rumpfes (2) eines Drehflügelflugzeugs (1) gegen einen pyramidenförmigen Aufbau (10) zum Tragen von Lasten, wobei der pyramidenförmige Aufbau (10) mit einem viereckigen Rahmen (11) sowie mit einem ersten Paar von zwei Armen (12, 13) und einem zweiten Paar von zwei Armen (14, 15) versehen ist, wobei sich jeder Arm (12, 13, 14, 15) von dem Rahmen (11) aus nach oben zu einer Spitze (16) hin erstreckt, **dadurch gekennzeichnet, dass** die Schutzvorrichtung umfasst:
- eine Schutzplatte (21), die zwischen dem Rumpf (2) und dem pyramidenförmigen Aufbau (10) angeordnet werden kann,
- ein Messer (30), das mit der Schutzplatte (21) fest verbunden ist, um auf die Arme des ersten Paares eine Kraft auszuüben, um diese zu brechen,
- einen Zirkel (40) mit zwei Schenkeln (41, 42), die an der Schutzplatte (21) befestigt sind, um die Arme des zweiten Paars in Querrichtung voneinander weg zu bewegen.

2. Vorrichtung nach Anspruch 1,
**dadurch gekennzeichnet, dass** die Schutzplatte (21) sich in Längsrichtung von einem vorderen freien Ende (22) bis zu einem hinteren freien Ende (23) erstreckt, wobei das Messer (30) und der Zirkel (40) zwischen dem vorderen freien Ende (22) und dem hinteren freien Ende (23) angeordnet sind.

3. Vorrichtung nach einem der Ansprüche 1 bis 2,
**dadurch gekennzeichnet, dass** die Schenkel miteinander fest verbunden sind und einen Winkel miteinander einschießen, der unter Einwirkung einer Kraft nach oben dazu tendiert, größer zu werden.

4. Vorrichtung nach einem der Ansprüche 1 bis 3,
**dadurch gekennzeichnet, dass** die Vorrichtung ein Mittel zum Spreizen aufweist, das darauf abzielt, die Schenkel in Querrichtung voneinander zu entfernen.

5. Vorrichtung nach einem der Ansprüche 1 bis 4,
**dadurch gekennzeichnet, dass** die Schenkel unter Formschluss mit einem Arm des zweiten Paares von Armen zusammenwirken.

6. Vorrichtung nach einem der Ansprüche 1 bis 4,
**dadurch gekennzeichnet, dass** die Schenkel an der Schutzplatte angelenkt sind.

7. System (5) zur Befestigung einer Ladung an einem Rumpf (2) eines Drehflügelflugzeugs (1), wobei das Befestigungssystem (5) einen pyramidenförmigen Aufbau (10) zum Tragen von Lasten aufweist, wobei der pyramidenförmige Aufbau (10) mit einem viereckigen Rahmen (11) sowie einem ersten Paar von zwei Armen (12, 13) und einem zweiten Paar von zwei Armen (14, 15) versehen ist, wobei jeder Arm (12, 13, 14, 15) sich von dem Rahmen (11) aus nach oben zu einer Spitze (16) hin erstreckt,
**dadurch gekennzeichnet, dass** das Befestigungssystem (5) eine Schutzvorrichtung (20) nach einem der Ansprüche 1 bis 6 aufweist,
mit:
- einer Schutzplatte (21) zur Anbringung zwischen dem Rumpf (2) und dem pyramidenförmigen Aufbau (10),
- einem Messer (30), das mit der Schutzplatte (21) fest verbunden ist und in Kontakt mit den Armen des zweiten Paares von Armen steht,
- einem Zirkel (40), der mit zwei Schenkeln (41, 42) versehen ist, die mit der Schutzplatte (21) verbunden sind, um die Arme des zweiten Paares von Armen in Querrichtung voneinander zu entfernen.

8. System nach Anspruch 7,
**dadurch gekennzeichnet, dass** das Messer (30) während des Flugs in Kontakt mit der Mitte (M1) der Arme des ersten Paares von Armen steht.

9. System nach einem der Ansprüche 7 bis 8,
**dadurch gekennzeichnet, dass** jeder Schenkel (41, 42) in Kontakt mit der Mitte (M2) der Arme des zweiten Paares von Armen während des Flugs steht.

10. System nach einem der Ansprüche 7 bis 9,
**dadurch gekennzeichnet, dass** die Arme an der Spitze um eine Drehachse (AXROT) angelenkt sind, wobei die Schenkel (41, 42) an der Schutzplatte angelenkt sind, um eine Drehung um die Drehachse (AXROT) ausführen zu können.

11. System nach einem der Ansprüche 7 bis 10,
**dadurch gekennzeichnet, dass** die Schutzplatte an dem pyramidenförmigen Aufbau befestigt ist.

12. System nach Anspruch 11,
**dadurch gekennzeichnet, dass** das Befestigungssystem in Höhenrichtung (200) ein Spiel zwischen der Schutzplatte (21) und der Spitze (16) aufweist.

13. System nach einem der Ansprüche 7 bis 12,
**dadurch gekennzeichnet, dass** die Arme des ersten Paars von Armen lang sind, und die Arme des zweiten Paars von Armen kurz sind.

14. Drehflügelflugzeug (1) mit einem Rumpf (2),
**dadurch gekennzeichnet, dass** das Drehflügelflugzeug (1) mit einem Befestigungssystem (5) nach einem der Ansprüche 7 bis 13 ausgerüstet ist, wobei der Rahmen (11) unter einer unteren Fläche (4) des Rumpfes über eine Mehrzahl von Aufhängungsmitteln (50) aufgehängt ist.

15. Verfahren zum Schutz eines Rumpfes (2) eines Drehflügelflugzeugs (1) gegenüber einem pyramidenförmigen Aufbau (10) zum Tragen von Lasten, wobei der pyramidenförmige Aufbau (10) mit einem viereckigen Rahmen (11) sowie einem ersten Paar von zwei Armen (12, 13) und einem zweiten Paar von zwei Armen (14, 15) versehen ist, wobei jeder Arm (12, 13, 14, 15) sich nach oben von dem Rahmen (11) zu einer Spitze (16) hin erstreckt,
**dadurch gekennzeichnet, dass**
- auf die zwei Arme des ersten Paares ein Druck ausgeübt wird, um sie zu brechen, um eine Drehung des pyramidenförmigen Aufbaus (10) zu bewirken,
- die beiden Arme des zweiten Paares in Querrichtung voneinander entfernt werden, um den pyramidenförmigen Aufbau zu zerdrücken, und
- eine Schutzplatte (21) zwischen dem pyramidenförmigen Aufbau und dem Rumpf angeordnet wird.

16. Verfahren nach Anspruch 15,
**dadurch gekennzeichnet, dass** die Arme so dimensioniert werden, dass die Arme des ersten Paares lang sind, und die Arme des zweiten Paares kurz.

## Claims

1. Protection device (20) for protecting a fuselage (2) of a rotorcraft (1) against a pyramidal structure (10) for carrying a load, said pyramidal structure (10) being provided with a frame (11) having a quadrilateral shape and with a first pair of two arms (12, 13) and with a second pair of two arms (14, 15), each arm (12, 13, 14, 15) extending in elevation from the frame (11) towards an apex (16),
**characterised in that** said protection device includes:
- a protective plate (21) suitable for being interposed between said fuselage (2) and said pyramidal structure (10),
- a knife (30) secured to said protective plate (21) for exerting a force on the arms of the first pair in order to break them,
- a compass (40) provided with two branches (41, 42) connected to said protective plate (21) in order to tend to move the arms of the second pair transversely apart from each other.

2. Device according to claim 1,
**characterised in that** said protective plate (21) extending longitudinally from a front free end (22) to a rear free end (23), said knife (30) and said compass (40) are arranged between said front free end (22) and said rear free end (23).

3. Device according to any one of claims 1 to 2,
**characterised in that** the branches are secured to each other and are separated by an angle tending to increase under the effect of a force in elevation.

4. Device according to any one of claims 1 to 3,
**characterised in that** the device comprises a spreading means tending to spread the branches transversely apart from each other.

5. Device according to any one of claims 1 to 4,
**characterised in that** said branches each co-operate by shape interference with an arm of said second pair of arms.

6. Device according to any one of claims 1 to 4,
**characterised in that** said branches are articulated to said protective plate.

7. Fastening system (5) for fastening a load to a fuselage (2) of a rotorcraft (10), said fastening system (5) comprising a pyramidal structure (10) for carrying a load, said pyramidal structure (10) being provided with a frame (11) having a quadrilateral shape and with a first pair of two arms (12, 13) and with a second pair of two arms (14, 15), each arm (12, 13, 14, 15) extending in elevation from the frame (11) towards an apex (16),
**characterised in that** the fastening system (5) includes a protection device (20) according to any one of claims 1 to 6, comprising:
- a protective plate (21) for being interposed between said fuselage (2) and said pyramidal structure (10),
- a knife (30) secured to said protective plate (21) and in contact with said arms of the first pair of arms,
- a compass (40) provided with two branches (41, 42) connected to said protective plate (21) in order to tend to move said arms of the second pair of arms transversely apart from each other.

8. System according to claim 7,
**characterised in that** said knife (30) is in contact with the middle (M1) of said arms of the first pair of arms in flight.

9. System according to any one of claims 7 to 8,
**characterised in that** each branch (41, 42) is in contact with the middle (M2) of said arms of the second pair of arms in flight.

10. System according to any one of claims 7 to 9,
**characterised in that**, said arms being articulated to said apex about an axis of rotation (AXROT), said branches (41, 42) are articulated to the protective plate in order to be capable of effecting a rotation about said axis of rotation (AXROT).

11. System according to any one of claims 7 to 10,
**characterised in that** said protective plate is fastened to the pyramidal structure.

12. System according to claim 11,
**characterised in that** said fastening system includes a clearance in elevation (200) between the protective plate (21) and the apex (16).

13. System according to any one of claims 7 to 12,
**characterised in that** said arms of the first pair of arms are long, said arms of the second pair of arms being short.

14. Rotorcraft (1) provided with a fuselage (2),
**characterised in that** said rotorcraft (1) is provided with a fastening system (5) according to any one of claims 7 to 13, said frame (11) being suspended under a bottom surface (4) of the fuselage by a plurality of suspension means (50).

15. Method for protecting a fuselage (2) of a rotorcraft (1) against a pyramidal structure (10) for carrying a load, said pyramidal structure (10) being provided with a frame (11) having a quadrilateral shape and with a first pair of two arms (12, 13) and with a second pair of two arms (14, 15), each arm (12, 13, 14, 15) extending in elevation from the frame (11) towards an apex (16), **characterised in that**:
- pressure is applied to said two arms of the first pair to break them in order to generate a rotation of the pyramidal structure (10),
- said two arms of the second pair are moved transversely apart from each other in order to collapse the pyramidal structure, and
- a protective plate (21) is placed between the pyramidal structure and said fuselage.

16. Method according to claim 15,
**characterised in that** said arms are dimensioned so that the arms of the first pair are long, said arms of the second pair being short.
